# EUROPEAN PATENT APPLICATION

(11) **EP 2 472 699 A1**
(43) Date of publication of application: **04.07.2012**
(21) Application number: 10811475.2
(22) Date of filing: 19.08.2010
(51) Int. Cl.: H02J 7/10, H01M 10/44, H02J 7/34, H04M 1/02, H04M 1/73

(54) **TERMINAL DEVICE AND SUPPLY CURRENT CONTROL METHOD**

(30) Priority: 24.08.2009 JP 2009193376
(71) Applicant: Panasonic Corporation, Kadoma-shi Osaka 571-8501 (JP)
(72) Inventor: KATSUMATA, Tomoki, 2-1-61, Shiromi, Chuo-ku, Osaka 540-6207 (JP)
(74) Representative: Grünecker, Kinkeldey, Stockmair & Schwanhäusser
(86) International application number: PCT/JP2010/005124
(87) International publication number: WO 2011/024416

(57) **Abstract**

Provided are a terminal device and a supply current control method which enable reliable charging with a current obtained by power generation. In a terminal device (100), a control unit (107) controls the output current of a generated power supply adjustment unit (102) on the basis of a current value (the current value of a current (A)) detected by a current detection unit (103) and a current value (the current value of a current (E)) detected by a current detection unit (106). More specifically, when the current value of the current (A) is more than or equal to the current value of the current (E), a current is outputted from the generated power supply adjustment unit (102), and when the current value of the current (A) is less than the current value of the current (E), the output of the current by the generated power supply adjustment unit (102) is stopped. Thus, a generated current is outputted from the generated power supply adjustment unit (102) only when a current drawn from a battery (105) is smaller than a charging current, thereby enabling reliable charging.

## Description

### Technical Field

The present invention relates to a terminal apparatus and a supply current control method.

### Background Art

A portable terminal is used on the premise that a user carries it about. Therefore, the portable terminal is provided with a charging circuit and a battery, for example, as disclosed in Patent Literature 1, and this charging circuit and a charger are connected to each other so that the battery is charged. Thus, the user can utilize the portable terminal even at a place where no power supply is available, by using power charged in the battery.

Moreover, in recent years, there have been proposed portable terminals in which a power generation unit such as a solar battery is installed. A current generated by the power generation unit is charged into the battery, and is also supplied to circuits including a charging display unit, etc. With this structure, it is expected that the portable terminal can be charged and utilized even where no power supply is available.

### Citation List

### Patent Literature

PTL 1.
   Japanese Patent Application Laid-Open No. 2005-86933

### Summary of Invention

### Technical Problem

However, in the case when the power generation unit of a solar battery or the like is simply connected to a charging system of a conventional portable terminal, a problem arises in that its charging process is not carried out with high efficiency. In particular, in the case when a power generation unit having a small generated output such as a solar battery is installed, even if a charging display indicating a charging state is given, almost all generated current is actually consumed by circuits and the like including the charging display unit, or a take-out current from the battery is too high, with the result that there is no progress in its charging process.

The object of the present invention is to provide a terminal apparatus and a supply current control method capable of reliably charging a generated current.

### Solution to Problem

The terminal apparatus of the present invention is provided with a supply adjustment section that adjusts the amount of supply of a current generated by a power generation section; a first detection section that detects the current value of a current outputted from the supply adjustment section; a distribution section that distributes the current outputted from the supply adjustment section to a battery and basic circuits; a second detection section that detects the current value of a composite current of the current to be outputted from the battery to the basic circuits and the current distributed to the basic circuits by the distribution section; and a control section that controls the output current of the supply adjustment section based upon the current value detected by the first detection section and the current value detected by the second detection section.

The supply current control method of the present invention is provided with: a first detection step of detecting a current value of a current generated by a power generation section; a distribution step of distributing the generated current to a battery and basic circuits; a second detection step of detecting the current value of a composite current of the current to be outputted from the battery to the basic circuits and the current distributed to the basic circuits in the distribution step; and a supply adjustment step of adjusting the amount of supply of the generated current based upon the current value detected by the first detection step and the current value detected by the second detection step.

### Advantageous Effects of Invention

The present invention can provide a terminal apparatus and a supply current control method capable of charging a generated current.

### Brief Description of Drawings

FIG.1 is a block diagram that illustrates a structure of a terminal apparatus in accordance with one embodiment of the present invention; and
FIG.2 is a flow chart explaining operations of the terminal apparatus.

### Description of Embodiments

Hereinafter, one embodiment of the present invention will be described in detail with reference to the drawings.

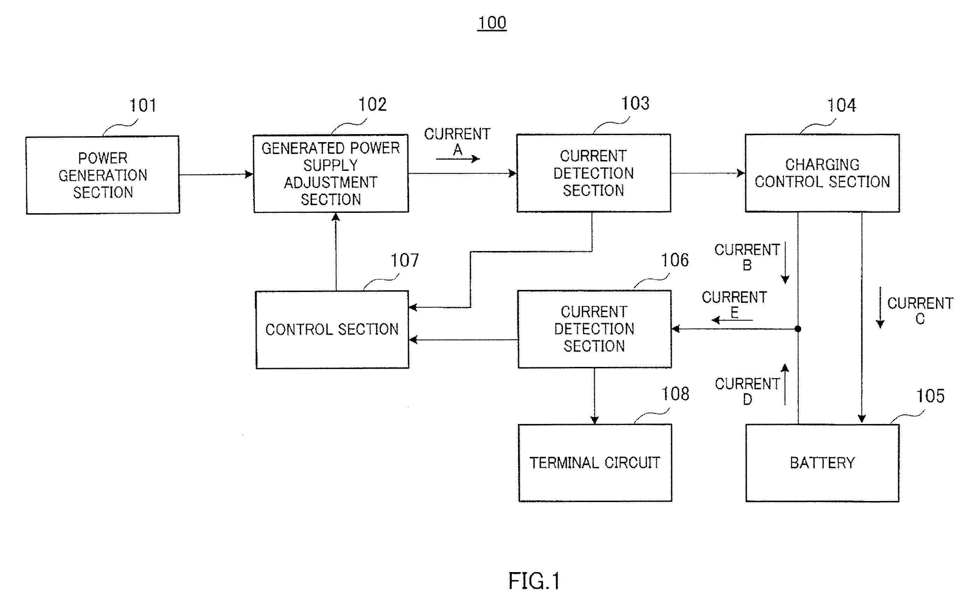

FIG.1 is a block diagram illustrating terminal apparatus 100 in accordance with one embodiment of the present invention. In FIG.1, terminal apparatus 100 is provided with power generation section 101, generated power supply adjustment section 102, first current detection section 103, charging control section 104, battery 105, second current detection section 106, control section 107 and terminal circuit 108 that is a basic circuit of the terminal.

Power generation section 101 outputs a generated power to generated power supply adjustment section 102. Power generation section 101 is a power generation means such as, for example, a solar battery or a fuel battery.

Generated power supply adjustment section 102 adjusts an output current based upon a power supply control signal from control section 107, by using a current from power generation section 101 as an input. More specifically, in the case when the power supply control signal indicates an output instruction, generated power supply adjustment section 102 outputs a current received from power generation section 101 toward charging control section 104. On the other hand, in the case when the power supply control signal indicates an output stop instruction, generated power supply adjustment section 102, when in a state where no current is being outputted, continues this state, while, when in a state where a current is being outputted, it stops the output.

Current detection section 103 is connected to a power supply line between generated power supply adjustment section 102 and charging control section 104. Current detection section 103 detects a current value of a current outputted from generated power supply adjustment section 102. This detected current value is outputted to control section 107.

Charging control section 104 outputs a current supplied from generated power supply adjustment section 102 toward battery 105 and terminal circuit 108.

Battery 105 is charged with a current received from charging control section 104. Moreover, battery 105 supplies power to terminal circuit 108.

Current detection section 106 detects a current value of a composite current formed by combining a current outputted from charging control section 104 toward terminal circuit 108 with a current supplied from battery 105 to terminal circuit 108. The current value thus detected is outputted to control section 107.

Control section 107 controls an output current from generated power supply adjustment section 102 based upon a current value detected by current detection section 103 and a current value detected by current detection section 106. More specifically, control section 107 first compares the current value detected by current detection section 103 and the current value detected by current detection section 106. Next, in the case when the current value detected by current detection section 106 is greater than the current value detected by current detection section 103, control section 107 stops the output of generated power supply adjustment section 102.

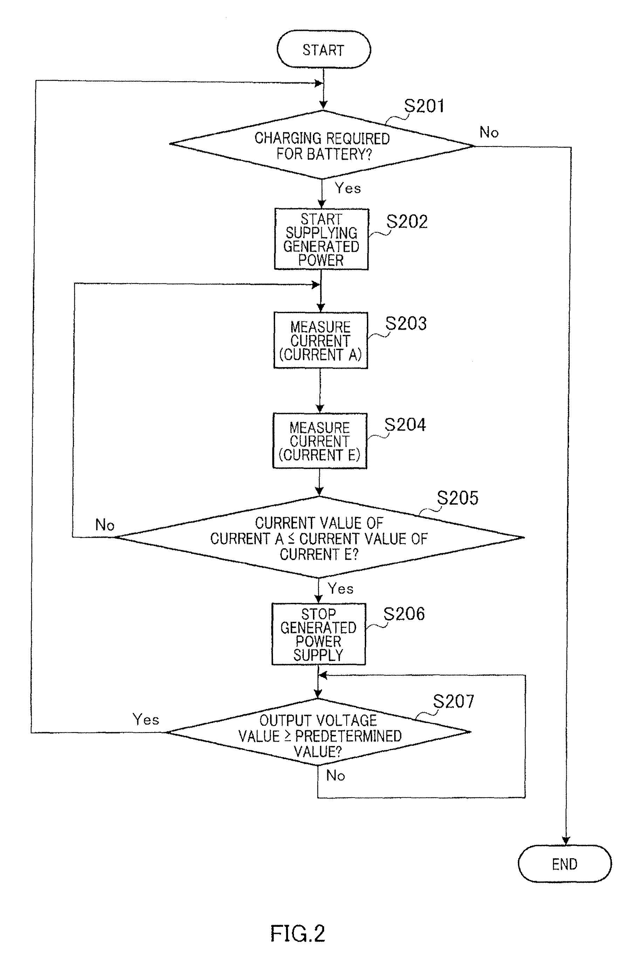

Operations of terminal apparatus 100 having the above-mentioned structure will be described below. FIG.2 is a flow chart explaining operations of terminal apparatus 100.

In FIG.2, in step S201, it is determined by control section 107 whether or not charging is required for the battery.

Upon determination that the charging is required (YES: in step S201), control section 107 allows generated power supply adjustment section 102 to start supplying a generated power in step S202.

In step S203, current detection section 103 detects a current value of an output current (current A) from generated power supply adjustment section 102. This current A is distributed between battery 105 and terminal circuit 108 by charging control section 104. In this case, as shown in FIG.1, the current distributed to terminal circuit 108 is defined as current B, and the current distributed to battery 105 is defined as current C. That is, the following equation is satisfied: current A = current B + current C (first relationship). Then, current C is charged to battery 105. Moreover, a take-out current from battery 105 is defined as current D.

In step S204, current detection section 106 detects a current value of current E formed by combining current B with current D. That is, the following equation is satisfied: current E = current B + current D (second relationship).

In step S205, control section 107 compares a current value of current A and a current value of current E.

In the case when the current value of current A is greater than the current value of current E (NO: in step S205), the sequence of the flow returns to step S203.

In contrast, in the case when the current value of current A is the current value of current E or less (YES: in step S205), control section 107 stops the output of a current by generated power supply adjustment section 102 in step S206. This stopped state of the output current is continued until control section 107 has determined that the output voltage of power generation section 101 is a predetermined value or more in step S207. Upon determination that the output voltage of power generation section 101 is the predetermined value or more (YES: in step S207), the sequence of the flow returns to step S201.

As described above, only in the case when a relationship current A > current E (third relationship) is satisfied, control section 107 allows generated power supply adjustment section 102 to output a current, and in the case when current A ≤ current E, a current output by generated power supply adjustment section 102 is stopped. When also taken the first and second relationships into consideration, by satisfying the third relationship, a relationship current C > current D is satisfied after all. That is, by satisfying the third relationship, a current to be charged becomes greater than a take-out current. Therefore, only in the case when current A > current E (third relationship) is satisfied, control section 107 allows generated power supply adjustment section 102 to output a current so that reliable charging can be performed.

As described above, in accordance with the present embodiment, in terminal apparatus 100, control section 107 controls an output current of generated power supply adjustment section 102 based upon a current value (current value of current A) detected by current detection section 103 and a current value (current value of current E) detected by current detection section 106. More specifically, in the case when the current value of current A is the current value of current E or more, a current is outputted from generated power supply adjustment section 102, while, in the case when the current value of current A is smaller than the current value of current E, an output of a current by generated power supply adjustment section 102 is stopped.

With this arrangement, only in the case when a take-out current from battery 105 becomes smaller than a charging current, a generated current is outputted from generated power supply adjustment section 102, thereby making it possible to perform charging reliably.

Additionally, in the above explanation, only in the case when the amount of current to be supplied to terminal circuit 108 is small by using the current value of current A as a reference, a current is outputted from generated power supply adjustment section 102. That is, according to sizes between the current value of current A and the current value of current E, a determination is made as to whether it is a high power consumption mode or a low power consumption mode. However, the present invention is not limited to this, and a determination as to whether it is a high power consumption mode or a low power consumption mode may be made based upon opening/closing of flips (not shown) or operation modes of a CPU (not shown).

Moreover, the above explanation has been given by exemplifying a structure in which power generation section 101 forms one component of terminal apparatus 100; however, the present invention is not limited to this, and power generation section 101 may be prepared as a separated component from terminal apparatus 100 and may be attached to terminal apparatus 100 as an externally attached component.

The disclosure of Japanese Patent Application No. 2009-193376 filed on August 24, 2009, including the specification, drawings and abstract, is incorporated herein by reference in its entirety.

### Industrial Applicability

The terminal apparatus and supply current control method of the present invention is effectively utilized as an apparatus capable of reliably charging a generated current.

### Reference Signs List

- 100: Terminal apparatus
- 101: Power generation section
- 102: Generated power supply adjustment section
- 103, 106: Current detection section
- 104: Charging control section
- 105: Battery
- 107: Control section
- 108: Terminal circuit

## Claims

1. A terminal apparatus comprising:
a supply adjustment section that adjusts an amount of supply of a current generated by a power generation section;
a first detection section that detects a current value of a current outputted from the supply adjustment section;
a distribution section that distributes the current outputted from the supply adjustment section to a battery and a basic circuit;
a second detection section that detects a current value of a composite current of the current outputted from the battery to the basic circuit and the current distributed to the basic circuit by the distribution section; and
a control section that controls the output current of the supply adjustment section based upon the current value detected by the first detection section and the current value detected by the second detection section.

2. The terminal apparatus according to claim 1, wherein when the current value detected by the first detection section is the current value detected by the second detection section or more, the supply adjustment section is allowed to output a current, while when the current value detected by the first detection section is the current value detected by the second detection section or less, the current outputted from the supply adjustment section is stopped.

3. A supply current control method comprising:
a first detection step of detecting a current value of a current generated by a power generation section;
a distribution step of distributing the generated current to a battery and a basic circuit;
a second detection step of detecting a current value of a composite current of the current outputted from the battery to the basic circuit and the current distributed to the basic circuit in the distributing step; and
a supply adjustment step of adjusting the amount of supply of the generated current based upon the current value detected by the first detection step and the current value detected by the second detection step.

4. The supply current control method according to claim 3, wherein in the supply adjustment step, when the current value detected by the first detection step is the current value detected by the second detection step or more, a current is supplied, while when the current value detected by the first detection step is the current value detected by the second detection step or less, the current supply is stopped.
